(19) Europäisches Patentamt
European Patent Office
Office européen des brevets

(11) EP 1 269 844 B1

(12) **EUROPEAN PATENT SPECIFICATION**

(45) Date of publication and mention of the grant of the patent:
**31.08.2005 Bulletin 2005/35**

(21) Application number: **01830408.9**

(22) Date of filing: **20.06.2001**

(51) Int Cl.[7]: **A01N 37/20**, A01N 37/16, A61C 1/00
// (A01N37/20, 59:14, 59:06, 59:00), (A01N37/16, 59:14, 59:06, 59:00, 37:20, 37:02)

# (54) Method for disinfecting and/or sterilising a dental unit

Verfahren zum Desinfizieren und/oder Sterilisieren einer zahnärztlichen Einheit.

Procédé de désinfection et/ou stérilisation d'une unité dentaire

(84) Designated Contracting States:
**AT BE CH CY DE DK ES FI FR GB GR IE IT LI LU MC NL PT SE TR**

(43) Date of publication of application:
**02.01.2003 Bulletin 2003/01**

(73) Proprietor: **CASTELLINI S.p.A.**
**I-40013 Castel Maggiore (Bologna) (IT)**

(72) Inventor: **Castellini, Franco**
**40124 Bologna (IT)**

(74) Representative: **Lanzoni, Luciano**
**c/o BUGNION S.p.A.**
**Via Goito, 18**
**40126 Bologna (IT)**

(56) References cited:
**WO-A-93/02973**
**WO-A-96/20737**
**WO-A-98/25468**
**GB-A- 2 268 879**
**GB-A- 2 355 198**

- **DATABASE MEDLINE [Online] M.EXNER ET AL.: "Influence of biofilms by chemical disinfectants and mechanical cleaning" retrieved from STN-INTERNATIONAL, accession no. 87237077 MEDLINE XP002181930 & ZENTRALBLATT FÜR BAKTERIOLOGIE, MIKROBIOLOGIE UND HYGIENE. SERIE B, UMWELTHYGIENE, KRANKENHAUSHYGIENE, ARBEITSHYGIENE, PRÄVENTIVE MEDIZIN, vol. 183, no. 5-6, April 1987 (1987-04), pages 549-563,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 269 844 B1

## Description

The invention relates to a method for disinfecting and/or sterilising the water line of a dental unit.

Oxidating solutions and/or compositions are used in dental surgery as disinfectants for sanitising and disinfecting dental units and instruments such as handpieces and burs.

The biocidal compositions and/or solutions available on the market are used to disinfect external surfaces.

WO 96 20737 discloses a synergistic cleaning and disinfecting composition for use in decontaminating biofilm-coated surfaces like fresh water lines providing water supply to dental instruments, the composition comprising (a) a detergent; (b) a denaturing agent for attacking the extracellular matrix formed between the microorganisms and between the microorganisms and the surface; and (c) a bactericide.

GB-2 268 879 discloses a solid composition for the preparation of a cleaning, sanitising or sterilising solution, for use on medical instruments (such as those used by dentists), comprising an organic peroxyacid precursor, a persalt, and a biocidal quaternary ammonium compound.

WO 38 25468 discloses a process for disinfecting medical instruments, by first reacting $H_2O_2$ or an $H_2O_2$ supplier with an N-acyl compound, then adjusting the pH in the range from 7 to 9.

GB-2 355 198 discloses a concentrate for producing a biocidally active solution comprising a water soluble oxidant generator-peroxide source (such as hydrogen peroxide, sodium perborate) and is in the form of a single-pack powder that is diluted and dissolved to produce the biocidally active solution, or a twin-pack liquid or liquid-and-solid formulation which (when the components are mixed or are diluted, mixed and dissolved) provide the biocidally active solution.

Prior art also teaches the use of an autoclaving method to sterilise surgical instruments and handpieces. Autoclaving is a very effective decontaminating method that will destroy bacterial colonies on instruments and/or parts of a dental unit that can be removed and placed in the autoclave.

The sterilising action of autoclaving is applied to both external and internal surfaces.

A dental unit is equipped with a set conduits leading to handpieces and supplying each handpiece with compressed air and water and/or mixtures of air and water.

The dentist uses the handpiece to perform operations in a patient's mouth.

A bur held and revolving in a handpiece is cooled by flowing water. The bur is fitted to the handpiece and is used to drill and cut. The bur is cooled by a flow of water and air to form a spray mixture of nebulised water and compressed air.

The handpiece is thus used directly in the patient's mouth during dental treatment. As a result, bacterial contamination from the handpiece to the patient and from the patient to the handpiece is inevitable. For this reason, hygiene is a very strongly felt problem in dental surgeries. To avoid cross contamination between patients, dentists and dental hygienists must therefore adopt a series of precautions.

Bacterial contamination may occur when the dentist or hygienist switches off the spray of water and air at the end of a particular operation.

In this situation, when the flow of air and water stops, no water drips from the handpiece. This is because the minor residual pressure in the conduits tending to push the water out is counteracted by a slight pressure in the opposite direction activated to prevent the water from dripping out.

A handpiece designed to operate in this way, although it does prevent water from dripping out, may allow germs and bacteria to be sucked into the handpiece itself from the patient's mouth, causing particles of tissue from the patient's mouth to be nebulised within the handpiece. As a result, any germs and viruses present in the patient's mouth may enter the water and compressed air supply conduit through the handpiece and from there may contaminate the entire water line of the dental unit.

In an experiment to test this type of bacterial contamination, a perfectly sterilised handpiece on a dental unit was fitted with a sterile bur and supplied with sterile water from a standard container. The dental unit was used for several days, after which the water in the tank was tested for bacteriological contamination. The tests revealed traces of bacteria, indicating that micro-organisms had been transferred from the patients to the dental unit, and had contaminated all the internal conduits, the water line of the dental unit and the water tank.

This provided a clear indication that microbes and/or viruses will contaminate the handpiece and from there will spread to the conduits and container/tank.

The transfer of microbes and/or viruses from the handpiece to the entire water system is facilitated by the concentration gradients which promote the spreading of microbes within the line.

The spreading of the microbial colonies is also facilitated by the movements of the fluids within the conduits.

To overcome the problem of bacterial contamination in dental units, a variety of sanitising protocols have been devised to introduce disinfectant in the water line.

In practice, the inside of the water conduits comes into contact with a disinfectant so that all the bacteria that may have been transferred from a patient to the conduits is completely destroyed before treatment on the next patient

begins.

The removable parts of the dental unit, such as the handpieces, are sterilised in an autoclave, while the conduits forming the water line of the dental unit are disinfected according to the protocols described below.

At regular intervals, for example at the end of a day's work or during a break in work, a complete disinfecting treatment is performed on the dental unit. This essentially consists in flushing the water line with a highly sporicidal substance and then allowing the substance to stand in the conduits. The length of this type of treatment depends on the degree of decontamination required.

The substance most frequently used for this type of operation is glutaraldehyde. The sporicidal solution is pumped through the conduits and after a set time, the pump is stopped and the sporicidal solution left to stand in the conduits for a defined time. Next, the solution containing the glutaraldehyde is drained out and the water line is flushed with water.

Using glutaraldehyde as disinfectant, it is possible to disinfect a surface by leaving the glutaraldehyde in contact with the surface for approximately five minutes before flushing it out.

Alternatively, high-level disinfection can be performed by leaving the glutaraldehyde in contact with a surface for twenty to thirty minutes before flushing it out.

To reach the sporicidal level required to achieve sterility, a contact time of five hours is necessary.

This type of treatment, that is, sterilisation, is therefore performed only at the end of the day. That is because performing it during normal working hours means stopping the dental unit for an excessively lengthy period of time during which no patients can be treated on that dental unit.

Indeed, the disinfection and sterilisation treatment described above cannot be carried out when the dental unit is occupied by a patient.

Moreover, disinfection and sterilisation cannot be carried out between one patient and the next either.

Although the disinfection and/or sterilisation performed with glutaraldehyde, as described above, makes the water line of the dental unit perfectly hygienic, the water conduits are contaminated immediately as soon as work is resumed.

Moreover, the contamination is not only due to the bacteria in the patient's mouth but also to the bacteriological burden in the mains water supply which contains micro-organisms of various kinds.

The micro-organisms that inhabit the water from the mains colonise and thrive in the water line of the dental unit. The micro-organisms cling to the walls of the conduits, multiply and form a biofilm that soon becomes difficult to remove. In time, the micro-organisms contaminate the entire water line and, as they grow, the biofilm on the inside surfaces of the conduits become thicker and thicker. When the biofilm peels off the surface of the water conduit of the dental unit, the micro-organisms that have grown inside the dental unit are released into the water flow.

Tests on samples of water from the mains used for several days in a dental unit showed that the water harboured thriving bacteriological colonies of around 100,000 microbes/ml of water used.

To sum up, we can say that the water line of a dental unit is subject to the following three different types of contamination:

1. direct contamination from the patient to the dental unit;
2. contamination from the water supply to the dental unit; and
3. contamination present in the compressed air used to drive the dental instruments and for the sprays.

The technical problem underlying the present invention is the provision of a method for disinfecting and/or sterilising the inside surfaces of the water line of a dental unit and that overcomes the limits and disadvantages of prior art.

The applicant has solved this technical problem by formulating a special composition comprising at least a first component as peracetic ion precursor, and a second component as source of peroxide or nascent oxygen.

The present invention has for an aim to provide a sterilising composition with a high biocidal action.

Another aim of the invention is to provide a method for rapidly and effectively disinfecting and/or sterilising the water line of a dental unit.

The invention relates to a method for disinfecting and/or sterilising the water lines of dental units, the method being as described in the relevant independent claim set out below.

The invention further relates to the use of a solution comprising peracetic ions as active agent for disinfecting and/or sterilising dental units, and having the characteristics described in the relevant independent claim set out below.

Other preferred embodiments of the invention are described in the dependent claims below.

Other technical characteristics of the invention appear in the detailed description below, which highlights the advantages of the invention.

The composition that forms the subject-matter of the present invention is a solid-state composition, preferably a powder.

Advantageously, the composition may be in the solid state and may take the form of a lozenge or tablet. Preferably, a first portion of the tablet contains the aforementioned first component and additives, as required, while a second portion of the tablet contains the aforementioned second component and additives, as required.

The composition forming the subject-matter of the present invention comprises a first component as peracetic ion precursor or peracetic acid, selected from the compounds whose general formula (I) is the following:

$$(CH_3CO)_2N—R—N(COCH_3)_2$$

where R is a $C_2$-$C_6$ alkyl; and
a second component as peroxide source or nascent oxygen, that may be a perborate or percarbonate of an alkali metal or alkaline earth metal.

Preferably, the second component is a perborate of sodium, a percarbonate of sodium or $O_2$ active oxygen.

Advantageously, R is ethyl and the first component is called TAED (tetra acetyl ethylene diamine); R is propyl and the first component is called TAPD (tetra acetyl propylene diamine).

In addition to the aforementioned components, the composition may include additives such as stabilisers, ion sequestrants and co-formulants normally used in the preparation of tablets or lozenges such as, for example, a system to stabilise the pH values of the solid composition and to prevent the first and second components from decomposing.

As pH stabilisers, acid substances such as phosphonic acid or malonic acid may be used.

The composition forming the subject-matter of the present invention is soluble in water, preferably in water warmed to a temperature of between 30 and 40°C with a pH between 7 and 8, even if it is subsequently used at ambient temperature.

When dissolved in an aqueous solution, the composition gives rise to a reaction which, in a period of time ranging from 5 to 15 minutes, stabilises to the following equilibrium:

$$NaBO_3 + H_2O \rightleftharpoons H_2O_2 + \text{sodium borate}$$

$$\left(CH_3CO\right)_2N-R-N\left(COCH_3\right)_2 + 2\,H_2O_2 \rightleftharpoons \left(CH_3CO\right)NH-R-NH\left(COCH_3\right) + 2\,CH_3COOOH$$

$$CH_3COOOH \rightleftharpoons CH_3COOO^{+} + H^{+}$$

where R is a $C_2$-$C_6$ alkyl group.

Alternatively, the hydrogen peroxide source may be obtained from sodium percarbonate such as, for example:

$$Na_2CO_3.nH_2O_2 + H_2O \text{ ----> } nH_2O_2 + \text{sodium carbonate.}$$

The aqueous solution comprising the first and second components has disinfecting and sterilising properties. In particular, the composition comprising peracetic ions or peracetic acid has been found to have a fungicidal, bacteriocidal, sporicidal and virocidal action.

The solution comprising peracetic acid may be stabilised by adding a suitable stabilising agent capable of preventing the chemical degradation of hydrogen peroxide or peracetic ions. In addition, the solution may comprise a suitable sequestrant such as EDTA and a suitable surfactant.

The solution comprising peracetic ions in equilibrium with the peracetic acid produced in the solution can be advantageously used in a method for disinfecting and/or sterilising a dental unit, the solution being applied at ambient temperature in particular to disinfect and/or sterilise the inside surfaces of the water line of the dental unit.

The method forming the subject-matter of the invention comprises the steps of:

- preparing an aqueous solution having a steady pH value of between 7 and 8 comprising:

    - a first component that may be any compound whose general formula (I) is the following:

$$(CH_3CO)_2N—R—N(COCH_3)_2$$

where R is a $C_2$-$C_6$ alkyl group;

- a second component that may be a perborate or percarbonate of alkali metals or alkaline earth metals, or $O_2$ active oxygen; and
- one or more additives and coformulants,

- introducing in the water line of the dental unit a portion of the aqueous solution comprising peracetic acid produced by the composition in equilibrium with the peracetic ions;

  - allowing the portion of aqueous solution introduced in the water line to act for a period of time comprised from 3 to 20 minutes; and
  - flushing the water line with an aqueous rinsing solution.

Preferably, the step of preparing the aqueous solution comprising peracetic ions in the presence of peracetic acid as active agent further comprises the following steps:

- placing in a suitable container a defined quantity of water preferably at a temperature of between 30 and 40°C and having a steady pH value of between 7 and 8;
- adding to the water a quantity of the sterilising composition according to the present invention in the form of powder or, alternatively, in the form of a pre-dosed tablet to obtain a defined concentration of peracetic ions in solution;
- agitating to obtain a solution and connecting the container to the water line of the dental unit. Preferably, the step of introducing the solution is performed with the same solution at ambient temperature.

According to the method, the step of introducing the solution containing peracetic ions is followed by a pause to let the peracetic ions act within the water line of the dental unit.

Compared to treatments effected with glutaraldehyde, the results are surprising. Indeed, a high level disinfection of the water line of the dental unit can be performed in just five minutes and high efficiency sterilisation in just ten minutes.

That means the method according to this invention can be conveniently used to disinfect and/or sterilise between one patient and the next during the course of a day's work, providing an effective and safe sanitising protocol applicable not only between patients but also at the end of the day.

As a result, all patients treated during the course of the day are effectively safeguarded against cross infection.

Preparing a sufficient quantity of solution containing peracetic ions ensures that the disinfecting and/or sterilising treatment can be performed at any time during the course of the 24 hours in a day or even over a period of more than one day since the solution, if suitably stabilised, is effective for two or more working days.

## Claims

**1.** Use of a sterilising aqueous solution comprising:

- a first component that may be any compound whose general formula (I) is the following:

$$(CH_3CO)_2N—R—N(COCH_3)_2$$

where R is a $C_2$-$C_6$ alkyl group;

- a second component that may be a perborate or percarbonate of alkali metals or alkaline earth metals, or $O_2$ active oxygen; and
- one or more additives and coformulants,

for disinfecting and/or sterilising the water line of a dental unit wherein said aqueous solution is allowed to act inside surfaces of said water line of the dental unit for a period of time comprised from 3 to 20 minutes.

**2.** The use according to claim 1, wherein the composition produces peracetic acid, in equilibrium with the peracetic ions, as active disinfecting and/or sterilising agent.

**3.** The use according to claim 1, wherein said first component is tetracetylethylenediamine TAED or tetracetylpropylenediamine TAPD.

**4.** The use according to claim 1, wherein said second component is sodium perborate or sodium percarbonate.

**5.** The use according to claim 1, which further comprises a pH stabiliser selected from malonic acid or phosphonic acid, a sequestrant agent as EDTA and a surfactant.

**6.** A method for disinfecting and/or sterilising a dental unit comprising the steps of:

- preparing an aqueous solution comprising:

  - a first component that may be any compound.whose general formula (I) is the following:

$$(CH_3CO)_2N—R—N(COCH_3)_2$$

  where R is a $C_2$-$C_6$ alkyl group;
- a second component that may be a perborate or percarbonate of alkali metals or alkaline earth metals, or $O_2$ active oxygen; and

  - one or more additives and coformulants,

- introducing in the water line of the dental unit a portion of the aqueous solution comprising peracetic acid produced by the composition in equilibrium with the peracetic ions;
- allowing the portion of aqueous solution introduced in the water line to act for a period of time comprised from 3 to 20 minutes; and
- flushing the water line with an aqueous rinsing solution.

**7.** The method according to claim 6, wherein the aqueous solution comprises the following equilibria:

$$NaBO_3 + H_2O \rightleftharpoons H_2O_2 + \text{sodium borate}$$

$$(CH_3CO)_2N—R—N(COCH_3)_2 + 2\,H_2O_2 \rightleftharpoons (CH_3CO)NH—R—NH(COCH_3) + 2\,CH_3COOOH$$

$$CH_3COOOH \rightleftharpoons CH_3COOO^- + H^+$$

**8.** The method according to claim 7, wherein the chemical equilibrium in aqueous solution is established at a temperature of between 30 and 40°C, and at a steady pH value of between 7 and 8.

**9.** The method according to claim 6, wherein the aqueous solution further comprises a sequestrant such as EDTA, a pH stabiliser and a surfactant.

**10.** The method according to claim 9, wherein the pH stabiliser is malonic acid or phosphonic acid.

**11.** The method according to claim 6, wherein the portion of aqueous solution introduced in the water line is allowed to act for a period of time of between 3 and 10 minutes to accomplish the disinfection of, and between 10 and 20 minutes to accomplish the sterilisation of, the inside surfaces of the water line of a dental unit.

**12.** The method according to claim 6, wherein said first component is tetracetylethylenediamine TAED or tetracetylpropylenediamine TAPD.

**13.** The method according to claim 6, wherein said second component is sodium perborate or sodium percarbonate.

**Patentansprüche**

1. Komposition einer sterilisierenden, wässerigen Lösung, enthaltend:

    - eine erste Komponente, die ein beliebiges Compound sein kann, dessen generelle Formel (I) die folgende ist:

    $$(CH_3CO)_2N—R—N(COCH_3)_2$$

      wo R eine $C_2$-$C_6$-Alkylgruppe ist;
    - eine zweite Komponente, welche ein Perborat oder Peroxocarbonat aus Alkalimetallen oder Erdalkalimetallen, oder aktiver Sauerstoff $O_2$ sein könnte; und
    - einen oder mehrere Zusätze und Koformulierungen, zum Desinfizieren und/oder Sterilisieren der Wasserleitung einer zahnärztlichen Einheit, bei welcher die genannte wässerige Lösung an den Innenflächen der genannten Wasserleitung der zahnärztlichen Einheit für eine Dauer wirken kann, die zwischen 3 bis 20 Minuten liegt.

2. Komposition nach Patentanspruch 1, bei welcher die Zusammensetzung Peressigsäure erzeugt, im Gleichgewicht mit Peressigionen, und zwar als aktiver Desinfizier- und/oder Sterilisierwirkstoff.

3. Komposition nach Patentanspruch 1, bei welcher die genannte erste Komponente Tetra-Acetyl-Äthylen-Diamin TAED oder Tetra-Acetyl-Propylen-Diamin TAPD ist.

4. Komposition nach Patentanspruch 1, bei welcher die genannte zweite Komponente Natriumperborat oder Natriumperoxocarbonat ist.

5. Komposition nach Patentanspruch 1, welche ausserdem einen pH-Stabilisierer enthält, ausgewählt aus Malonsäure oder Phosphonsäure, einem Maskierungsmittel wie EDTA und einem Tensid.

6. Verfahren zum Desinfizieren und/oder Sterilisieren einer zahnärztlichen Einheit, enthalten die folgenden Phasen:

    Zubereitung einer wässerigen Lösung, enthaltend:

    - eine erste Komponente, die ein beliebiges Compound sein kann, dessen generelle Formel (I) die folgende ist:

    $$(CH_3CO)_2N—R—N(COCH_3)_2$$

      wo R eine $C_2$-$C_6$-Alkylgruppe ist;
    - eine zweite Komponente, welche ein Perborat oder Peroxocarbonat aus Alkalimetallen oder Erdalkalimetallen, oder aktiver Sauerstoff $O_2$ sein kann; und
    - einen oder mehrere Zusätze und Koformulierungen,
    - Eingeben in die Wasserleitung der zahnärztlichen Einheit einer Portion der wässerigen Lösung, enthaltend Peressigsäure, erzeugt durch die Komposition im Gleichgewicht mit den Peressigionen;
    - die Portion der in die Wasserleitung eingebenen wässerigen Lösung für die Dauer von 3 bis 20 Minuten einwirken lassen; und
    - Durchspülen der Wasserleitung mit einer wässerigen Spüllösung.

7. Verfahren nach Patentanspruch 6, bei welchem die wässerige Lösung die folgenden Gleichgewichte enthält:

$$NaBO_3 + H_2O \rightleftharpoons H_2O_2 + \text{Natriumborat}$$

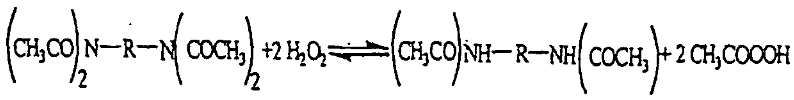

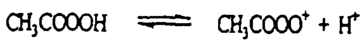

**8.** Verfahren nach Patentanspruch 7, bei welchem das chemische Gleichgewicht in der wässerigen Lösung bei einer Temperatur zwischen 30°C und 40°C festgelegt ist, und bei einem stabilen pH-Wert zwischen 7 und 8.

**9.** Verfahren nach Patentanspruch 6, bei welchem die wässerige Lösung außerdem ein Maskierungsmittel wie EDTA, einen pH-Stabilisierer und ein Tensid enthält.

**10.** Verfahren nach Patentanspruch 9, bei welchem der pH-Stabilisierer Malonsäure oder Phosphonsäure ist.

**11.** Verfahren nach Patentanspruch 6, bei welchem es erlaubt ist, die in die Wasserleitung eingegebene Portion der wässerigen Lösung für eine Dauer zwischen 3 und 10 Minuten einwirken zu lassen, um die Desinfizierung der Innenflächen der Wasserleitung einer zahnärztlichen Einheit durchzuführen, und zwischen 3 und 20 Minuten, um die Sterilisierung derselben durchzuführen.

**12.** Verfahren nach Patentanspruch 6, bei welchem die genannte erste Komponente Tetra-Acetyl-Äthylen-Diamin TAED oder Tetra-Acetyl-Propylen-Diamin TAPD ist.

**13.** Verfahren nach Patentanspruch 6, bei welchem die genannte zweite Komponente Natriumperborat oder Natriumperoxocarbonat ist.

## Revendications

**1.** Utilisation d'une solution aqueuse de stérilisation comprenant :

- un premier composant qui peut être un composé quelconque dont la formule générale (I) est la suivante :

$$(CH_3CO)_2N—R—N(COCH_3)_2$$

  où R est un groupe alkyle $C_2$-$C_6$ ;
- un second composant qui peut être un perborate ou percarbonate de métaux alcalins ou de métaux terreux alcalins, ou oxygène active $O_2$; et
- un ou plusieurs additifs et coformulants,

pour désinfecter et/ou stériliser le circuit d'eau d'une unité dentaire, **caractérisée en ce qu'**on laisse agir ladite solution aqueuse à l'intérieur de surfaces dudit circuit d'eau de l'unité dentaire pendant un intervalle de temps compris entre 3 et 20 minutes.

**2.** L'utilisation selon la revendication 1, **caractérisée en ce que** la composition produit de l'acide peracétique, en équilibre avec les ions peracétiques, comme agent actif de désinfection et/ou de stérilisation.

**3.** L'utilisation selon la revendication 1, **caractérisée en ce que** ledit premier composant est du tétra-acétyl-éthylène-diamine TAED ou du tétra-acétyl-propylène-diamine TAPD.

**4.** L'utilisation selon la revendication 1, **caractérisée en ce que** ledit second composant est du perborate de sodium ou du percarbonate de sodium.

**5.** L'utilisation selon la revendication 1, qui comprend en outre un stabilisateur de pH choisi entre acide malonique

ou acide phosphonique, un agent séquestrant tel que l'EDTA et un tensioactif.

**6.** Un procédé de désinfection et/ou de stérilisation d'une unité dentaire comprenant les phases consistant à :

- préparer une solution aqueuse comprenant :
  - un premier composant qui peut être un composé quelconque dont la formule générale (I) est la suivante :

$$(CH_3CO)_2N—R—N(COCH_3)_2$$

  où R est un groupe alkyle $C_2$-$C_6$ ;
  - un second composant qui peut être un perborate ou percarbonate de métaux alcalins ou de métaux terreux alcalins, ou oxygène active $O_2$ ; et
  - un ou plusieurs additifs et coformulants,
- introduire dans le circuit d'eau de l'unité dentaire une quantité de solution aqueuse comprenant de l'acide peracétique produit par la composition en équilibre avec les ions peracétiques ;
- laisser agir la quantité de solution aqueuse introduite dans le circuit d'eau pendant un intervalle de temps compris entre 3 et 20 minutes ; et
- rincer le circuit d'eau avec une solution aqueuse de rinçage.

**7.** Le procédé selon la revendication 6, **caractérisé en ce que** la solution aqueuse présente les équilibres suivants :

$$NaBO_3 + H_2O \rightleftharpoons H_2O_2 + \text{Natriumborat}$$

$$(CH_3CO)_2N—R—N(COCH_3)_2 + 2\,H_2O_2 \rightleftharpoons (CH_3CO)NH—R—NH(COCH_3) + 2\,CH_3COOOH$$

$$CH_3COOOH \rightleftharpoons CH_3COOO^+ + H^+$$

**8.** Le procédé selon la revendication 7, **caractérisé en ce que** l'équilibre chimique en solution aqueuse est établi à une température comprise entre 30 et 40°C, et à une valeur de pH stabilisé comprise entre 7 et 8.

**9.** Le procédé selon la revendication 6, **caractérisé en ce que** la solution aqueuse comprend en outre un séquestrant tel que l'EDTA, un stabilisateur de pH et un tensioactif.

**10.** Le procédé selon la revendication 9, **caractérisé en ce que** le stabilisateur de pH est de l'acide malonique ou de l'acide phosphonique.

**11.** Le procédé selon la revendication 6, **caractérisé en ce qu'**on laisse agir la quantité de solution aqueuse introduite dans le circuit d'eau pendant un intervalle de temps compris entre 3 et 10 minutes pour effectuer la désinfection des surfaces intérieures du circuit d'eau de l'unité dentaire et entre 10 et 20 minutes pour effectuer la stérilisation de ces mêmes surfaces intérieures du circuit d'eau de l'unité dentaire.

**12.** Le procédé selon la revendication 6, **caractérisé en ce que** ledit premier composant est du tétra-acétyl-éthylène-diamine TAED ou du tétra-acétyl-propylène-diamine TAPD.

**13.** Le procédé selon la revendication 6, **caractérisé en ce que** ledit second composant est du perborate de sodium ou du percarbonate de sodium.